# EUROPEAN PATENT SPECIFICATION

(11) **EP 4 291 330 B1**
(45) Date of publication and mention of the grant of the patent: **04.06.2025**
(21) Application number: 22704810.5
(22) Date of filing: 10.02.2022
(51) Int. Cl.: G01N 1/38, B01F 33/30, B01L 3/00

(54) **PRESSURE DRIVEN MICROFLUIDIC CHIP AND METHOD FOR DELIVERING A SAMPLE AT A DETERMINED FLOW RATE**
DRUCKANGETRIEBENER MIKROFLUIDISCHER CHIP UND VERFAHREN ZUR ABGABE EINER PROBE MIT EINER BESTIMMTEN DURCHFLUSSRATE
PUCE MICROFLUIDIQUE COMMANDÉE PAR PRESSION ET PROCÉDÉ DE DISTRIBUTION D'UN ÉCHANTILLON À UN DÉBIT DÉTERMINÉ

(30) Priority: 11.02.2021 NL 2027544
(43) Date of publication of application: 20.12.2023
(73) Proprietor: Micronit Holding B.V., 7521 PV Enschede (NL); Enzyre B.V., 6534 AT Nijmegen (NL)
(72) Inventor: VROUWE, Elwin Xander, 7546 GV Enschede (NL); MEIJER, Henrieke Anne, 7511 GG Enschede (NL); BLOM, Marko Theodoor, Delden 7491 EV (NL)
(74) Representative: Arnold & Siedsma
(86) International application number: PCT/NL2022/050066
(87) International publication number: WO 2022/173296

(56) References cited:
- US-A1- 2007 148 048
- US-A1- 2007 148 048
- US-A1- 2008 257 754
- US-A1- 2008 257 754
- US-A1- 2009 151 792
- US-A1- 2009 151 792
- VASILAKIS NIKOLAOS ET AL: "Modular Pressure and Flow Rate-Balanced Microfluidic Serial Dilution Networks for Miniaturised Point-of-Care Diagnostic Platforms", SENSORS, vol. 19, no. 4, 21 February 2019 (2019-02-21), pages 911, XP055854530, DOI: 10.3390/s19040911
- VASILAKIS NIKOLAOS ET AL: "Modular Pressure and Flow Rate-Balanced Microfluidic Serial Dilution Networks for Miniaturised Point-of-Care Diagnostic Platforms", SENSORS, vol. 19, no. 4, 21 February 2019 (2019-02-21), pages 911, XP055854530, DOI: 10.3390/s19040911

## Description

The invention relates to a pressure driven microfluidic chip for delivering a first liquid at a determined flow rate, as claimed claim 6. The invention also relates to a method, claimed in claim 1.

Various applications for microfluidic chips exist. For instance, the chips may be used in lab-on-a-chip applications or point-of-care solutions. In many applications, establishing a determined flow rate of the first liquid is critical for the correct operation of the chip. As an example, when submitting a diluted sample to a concentration sensitive test, it is important the sample is diluted at a predetermined ratio. As the dilution ratio depends on the flow rates of the sample and the diluent, variations in the flow rate of the sample directly affect the test results.

The flow rate of any liquid in a pressure driven microfluidic is determined by a combination of factors, amongst which the geometry and dimension of the passage through which the liquid flows, and the viscosity of the liquid.

However, in certain applications the viscosity of the liquid to be delivered may not be exactly known, or may vary. An unknown variation in viscosity introduces additional uncertainty in any quantity determined on the basis of the viscosity, such as the flow rate. An example of such an application is shown in US 2007/148048 A1, wherein microfluidic devices that comprise upstream channels that have a resistance higher than the resistance of the downstream channels are said to be robust for blending two fluids, especially if they are oil and water or of different viscosities.

While methods of feeding such a microfluidic device are known, such as from US 2009/0151792 A1, wherein a liquid feeding method for feeding liquid in a minute flow path is provided, they are still prone to variations. In this method, the minute flow path includes flow paths connected to each other directly at respective first ends. The liquid feeding direction of a liquid, in this case blood, in the minute flow path is controlled by creating a high-pressure state at a second end of the flow path located across the blood, while creating a low-pressure state or a closed state at a second end of the flow paths.

It is an object of the invention to provide a microfluidic chip that is less susceptible to variation in viscosity of the first liquid, in order to deliver the first liquid at a determined flow rate, preferably with a smaller uncertainty.

This object is achieved by a pressure driven microfluidic chip according to the preamble of claim 6, further comprising a vent connected to the first passage at a position beyond the container as seen from the second inlet.

The vent can be used to let out air present in the container, in order to fill the container with first liquid. By placing the vent beyond the container, the second liquid will first reach the container before reaching the vent. Accordingly, the second liquid may not, or at least not initially, exit the vent. The vent may in particular be placed after a capillary stop valve, if present, connecting the first passage with the container, so that the second liquid triggers the stop valve before reaching the vent.

By providing the first and second passages separately from each other, the first and second liquid encounter the different resistances to flow. When the first resistance is significant with respect to the second, for instance higher than the second, the first resistance determines the flow rate to a relatively large extent. Thus, the second liquid has a relatively large influence on the flow ratio, for example as compared to the influence of the first liquid. Therefore, a second liquid with a relatively accurately known viscosity, and/or with a relatively small variation, can be chosen to accompany a first liquid, e.g. a sample. Accordingly, variations in the viscosity of the first liquid will cause variations in the flow rate to a lesser extent, as the more constant effect of the second liquid also contributes to the flow rate.

By increasing the difference in resistance, a desired robustness against variation in viscosity of the first liquid can be obtained. By increasing the ratio of the first resistance over the second resistance, a larger reduction of the effect of the viscosity variation on the flow rate will be achieved. For instance for when the two resistances are equal, the relative variation in flow due to a certain viscosity variation will be halved.

Depending on the application the first resistance can be chosen to be (approximately) equal to the second resistance or to be larger than the second resistance. However, advantageous effects can also be observed when the first resistance equals a tenth of the second resistance or half of the second resistance.

In particular, the first resistance may be at least ten times higher than the second resistance. Accordingly, the influence of the first resistance will be an order of magnitude higher, thereby reducing the influence of viscosity variations in the first liquid also approximately an order of magnitude, which is sufficient for many practical applications.

The first and second resistance may be defined for a liquid of similar or equal viscosity, or for the same liquid. When in use, the first and second resistance may be defined for the respective liquids used, and as such may be defined even for dissimilar viscosities.

Pressure driven chip as defined herein also comprises capillary pressure driven chip, as for the flow of fluid the source of pressure is irrelevant.

In an embodiment of the chip, the chip further comprises a third passage connected to the second passage downstream of the container for supplying a third liquid to the second passage, the chip thereby being suitable for mixing the third liquid with the first liquid.

By mixing the first liquid with a third liquid, a device can be obtained that allows mixing liquids. As described above, the influence of viscosity variations in the first liquid can be compensated to achieve a relatively constant or accurately known flow rate. By then mixing the first liquid with a third liquid, a relatively constant or accurately known mixing ratio can be obtained, since the mixing ratio depends on the ratio of flow rates of the first and second liquid. As such, at a predefined flow rate of the third liquid, a predefined mixing ratio can be obtained with the chip according to this embodiment, even if the first liquid has a varying viscosity.

The third passage may intersect with the second passage downstream of the container. The third passage may be defined as upstream of the intersection, e.g. towards an input for the third liquid. The second passage may run from the container to the outlet. A portion of the second passage may be upstream of the intersection, whereas another portion of the second passage may be downstream of the intersection.

In another embodiment of the chip, the chip further comprises a third inlet connected to the third passage. The third inlet may be used to separately supply a third liquid.

Alternatively it is possible to connect the third passage to the second inlet, so that the third passage and the first passage share the second inlet. Accordingly, the same inlet may be used for providing liquid to the third and first passages. Such a device allows using the same liquid as first and third liquid, and is relatively simple in use, as it requires less separate means, such as conduits, for providing liquid.

In yet another embodiment of the chip, a minimum cross sectional area of the first passage is smaller than a minimum cross sectional area of the second passage. The smaller minimum cross sectional area can create a higher resistance to flow.

In yet another embodiment of the chip, the minimum cross sectional area of the first passage is smaller than a minimum cross sectional area of the third passage. Accordingly, the first passage may have a higher resistance to liquid flow (for instance of the same liquid) than the third passage. This may aid in delivering smaller portions of first liquid in into a mass of third liquid.

The cross sectional area is defined in the transversal direction, i.e. perpendicular to a flow direction defined by the passage and/or to a longitudinal direction of the passage.

As the minimum cross sectional area defines the resistance to flow to the largest extent, the cross sectional area at other locations of the passages may be less relevant or not relevant at all.

In yet another embodiment of the chip, the chip comprises a capillary stop valve between the container and the first passage and/or a capillary stop valve between the container and the second passage.

The capillary stop valves upstream and downstream of the container may allow filling the container with first liquid, thereby essentially preparing or pre-loading the chip for delivering the first liquid. After preparing or pre-loading, the stop valves may be triggered by supplying the second and/or third liquid in order to start delivering the first liquid at a desired moment.

The capillary stop valve(s) may form a flow restriction in the first and/or second passage, in particular by constituting the minimum cross sectional flow area for the respective passage.

In yet another embodiment of the chip, the chip further comprises an absorber connected to the first inlet. Using an absorber connected to the first inlet, for instance in parallel to the container, the container may be prevented from overflowing, by the absorber absorbing excess first liquid. This is particularly useful in combination with one or more capillary stop valves, as the absorber could aid in preventing excess fluid from triggering the stop valve(s).

The invention also relates to a pressure driven method of delivering a first liquid at a determined flow rate, in accordance with claim 1.

As the first resistance contributes to defining the flow rate, the flow rate is at least partially defined by the viscosity of the second liquid. Therefore, the influence of viscosity variations in the first liquid are reduced.

As the first resistance is higher than the second resistance, the first resistance is more significant for the flow rate than the second resistance. Accordingly, using the second liquid in the first passage for pushing out the first liquid, allows defining the flow rate of the first liquid to a relatively large extent using the second liquid. As such, influences of viscosity variations of in the first liquid are compensated. In particular, the second liquid can be chosen to have a known and/or well defined and/or constant viscosity to increase accuracy.

Of course, a suitable ratio between the first and second resistance can be chosen, such as 1:10, 1:2, 1:1. In particular, a ratio of first to second resistance of >1:1 or >10:1 is considered.

The invention also relates to a method for mixing the first liquid and a third liquid, the method comprising the method above of dispensing the first liquid and supplying the third liquid downstream of the container in order to mix the first liquid with the third liquid at a predetermined concentration of first liquid.

By mixing the first and third liquid in this way, a mixture may be obtained in which the ratio of first liquid to third liquid is relatively accurate.

In particular, the first liquid may be supplied via a fist inlet, and the second liquid may be supplied via a separate, second inlet.

Using two separate inlets allows preloading the first liquid.

It is particularly advantageous when the viscosity of the second liquid is higher than a viscosity of the first liquid.

In this case, the flow resistance of the second liquid will be relatively high, thereby having more influence on the flow rate of the first liquid. Therefore, viscosity variations in the first liquid have less effect on the flow rate.

Advantageously, the first resistance is at least approximately ten times higher than the second resistance.

When the first resistance is so much higher, the variations in viscosity of the first liquid become of little practical relevance.

As an example, the following use case is considered. Blood plasma typically has a viscosity of ca. 1.5 mPa · s. However, from sample to sample, the viscosity may change. The spread of the viscosity is expressed as variation in the viscosity value. In the case of blood plasma, the variation is often reported to be ca. ± 0.2 mPa·s, i.e. ca. 13% of the viscosity value. For analysis, blood plasma samples are often diluted using aqueous buffers. Of course, other buffers may be employed. In this example, aqueous buffers are used because they are widely used. In general, aqueous buffers have a viscosity of around 1 mPa·s, thus being relatively close to the sample's viscosity. The two viscosities are within the same order of magnitude. When mixing the buffer and the sample using a pressure driven system, the mixing ratio is defined by the flow rates of the buffer and the sample. In general, without applying the inventive principle as described herein, the flow rate is determined by channel geometry and viscosity of the sample and the driving pressure differential. As such, variations in the viscosity of the blood plasma influence the mixing ratio to a relatively large extent. This detriments experimental results to a relatively large extent.

By using a second liquid in a first passage, the negative effect of viscosity variations in the sample can be accounted for. In particular, when the first passage has a resistance to flow approximately 10 times larger than the resistance to flow of a second passage through which the sample flows, most of the flow resistance is encountered in the first passage. The flow rate is therefore determined to a relatively large extent in the first passage. Even using an aqueous buffer as second liquid, satisfactory results can be obtained due to the higher flow resistance of the first passage. In principle, if the resistance to flow of the first passage is about 10 times higher than that of the second passage, the effect of the viscosity variations is reduced by about 10 times. Therefore, the apparent variation in viscosity as seen from the flow rate is reduced to ca. 1.3%, instead of the actual 13%. The same result can be obtained by using a second liquid with a relatively high viscosity as compared to the first liquid, with or without the higher resistance in the first passage.

It must be noted that this example is illustrative only. Of course the numbers may vary, and the current disclosure can be used for other types of samples and buffers as well. Further it is noted that the actual resistance to flow is also influence by other factors, such as channel length, channel shape, and resistance of e.g. inlet and outlet. However, given the current disclosure it is submitted that the skilled person understands that introducing a resistance to flow can aid in reducing the influence of sample viscosity. The resistance to flow can be created in various ways, such as by including a small capillary stop valve, introducing a flow restrictor in the first passage, or by using a relatively viscous second liquid.

The invention will be further elucidated with reference to the attached figures, wherein:
Figures 1A and 1B schematically show a simplified embodiment of a pressure driven microfluidic chip for delivering a first liquid at a determined flow rate;
Figures 2A and 2B schematically show a simplified embodiment of a pressure driven microfluidic chip for mixing a first and third liquid; and
Figures 3A - 3D schematically show another embodiment of a microfluidic chip for mixing a first and third liquid at a determined flow rate.

Across the figures, like elements are referred to using like reference numerals. Like elements of different embodiments are referred to using reference numerals increased by one hundred (100).

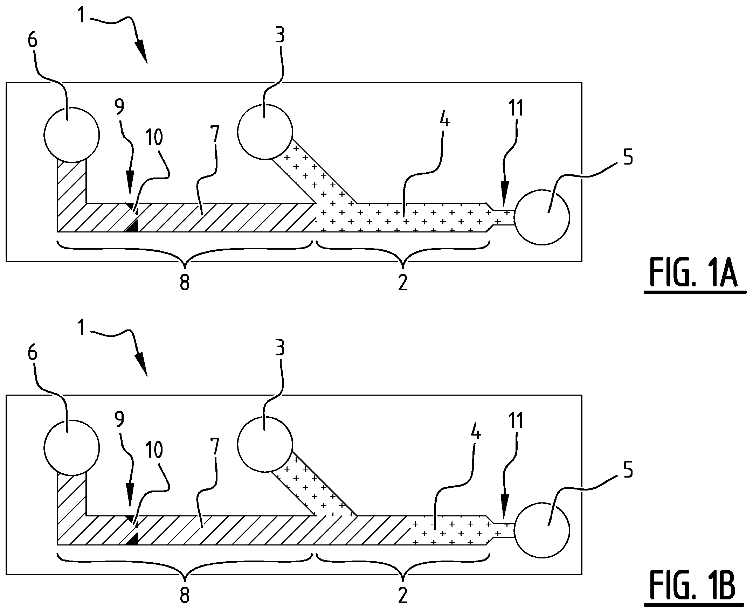

Figures 1A and 1B show a simplified microfluidic chip 1. The chip 1 has a container 2 which can hold liquid. In the shown embodiment, the container 2 is formed by a segment of a microfluidic channel 2. Although not shown here, the channel 2 is provided as a trough in a first layer of the chip 1, and a second layer seals the channel 2 and other structures of the chip 1. Inlet and outlets can be created by making a hole in the first or second layer of the chip 1. The chip 1 also comprises a first inlet 3. The first inlet 3 is connected to the container 2, so that a first liquid 4 can be let into the container 2 via the first inlet 3. On the other side, the container 2 is connected to an outlet 5 via a second passage 11. First liquid 4 from the container 2 can therefore exit the chip 1 via the outlet 5. The chip 1 has a second inlet 6. Via the second inlet 6, a second liquid 7 can be let into the chip 1. The second inlet 6 connects to the container 2 via a first passage 8, which in this example is also a segment of a microfluidic channel 8.

The microfluidic chip 1 of figures 1A and 1B is operated as follows. After first liquid 4 has been let into the container 2 (see figure 1A), second liquid 7 is added through the second inlet 6. The second liquid 6 therefore pushes the first liquid 4 out of the chip via the outlet 5 (see figure 1B). To prevent the first liquid 4 from escaping through the first inlet 3, the first inlet 3 may be sealed, or a pressure may be applied thereto. Sealing the first inlet 3 makes sure no fluid flow is possible in the channel section between the inlet 3 and the channel 2, thereby avoiding influences this channel section may have on the flow rate.

The first passage 8 includes a narrowing 9, shown here using a funnel 10. The narrowing 9 causes a flow restriction in the first passage 8. Of course, other types of narrowing could also be used, or other types of flow restrictions could be used. The flow restriction 9 creates a relatively high resistance to flow, so that the first passage 8 has a relatively high resistance to flow. The second passage 11 has no narrowing 9, so that its resistance to flow is lower. The flow rate of the first liquid 4 is determined by the pressure drop from the second inlet 6 to the outlet, and the resistance to flow of the first and second liquid 4, 7 - when disregarding flow to or from the first inlet 3 at the same time. As the resistance to flow in the first passage 8 is relatively high, the first passage's 8 contribution to the flow rate is significant. The contribution of the second passage 11 is analogously less significant.

The chip 1 can thus be used to deliver the first liquid 4 at a determined flow rate, even if the viscosity of the first liquid 4 varies within a sample, or from sample to sample, or is not accurately known. By simply using a second liquid 7 of a known and relatively constant viscosity, the flow rate can be determined to a relatively large extent by the known second liquid 7 rather than by the sample first liquid 4. As such, the flow rate can be determined relatively accurately.

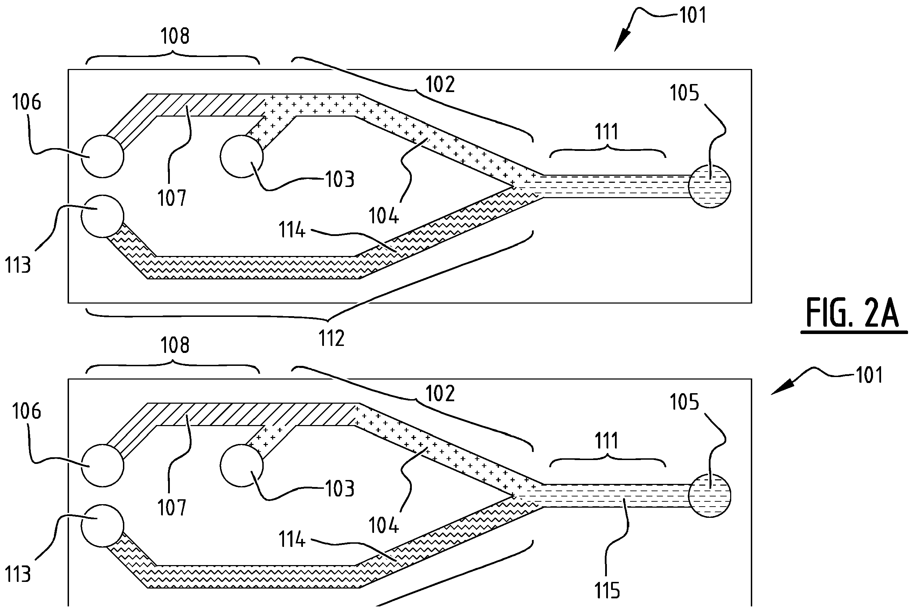

Figures 2A and 2B show a chip 101 that is similar to the chip 1 of figures 1A and 1B. As such, only the difference will be described below. The chip 101 of figures 2A and 2B has a third passage 112 that connects to the second passage 111 downstream of the container 102. The third passage has a third inlet 113, so that a third liquid 114 can be let into the third passage 112. As an alternative the third passage 112 could be connected to the second inlet 106, so that the second and third liquid 107, 114 are the same.

By driving the third liquid 114 at the same time as the second liquid 107, the two liquids merge in the second passage 111, where they will mix. As such, a mixed fluid 115 is delivered at the output 105. Depending on the liquids involved, different mixing behavior is observed.

Instead of restricting flow of the second liquid 107 by a flow restriction caused by the geometry of the first passage 108, the resistance to liquid flow in the first passage 108 is increased by choosing a second liquid 107 with a relatively high viscosity. Similar as to in the chip 1 of figures 1A and 1B, the flow rate is therefore defined to a relatively large extent by second liquid 107 flowing in the first passage 108, so that the flow rate is not as much influenced by variations in the viscosity in the first liquid 104.

The mixing ratio between the first and third liquids 104, 114 is defined by the flow rates of the liquids 104, 114. As the flow rate of the first liquid 104 is defined to a relatively large extent by the flow resistance in the first passage 108, and to a lesser extent by flow of the first liquid 104, the mixing ratio is determined to a relatively large extent by the second liquid 107 flowing through the first passage 108. As such, the chip 101 of figures 2A and 2B can be used for delivering a mixed fluid 115 at a predetermined mixing ratio.

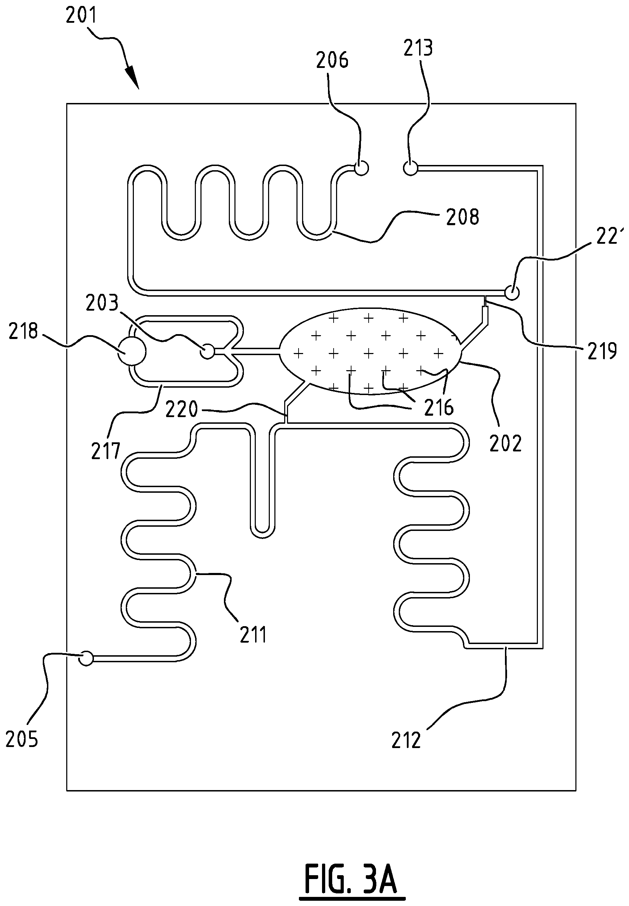

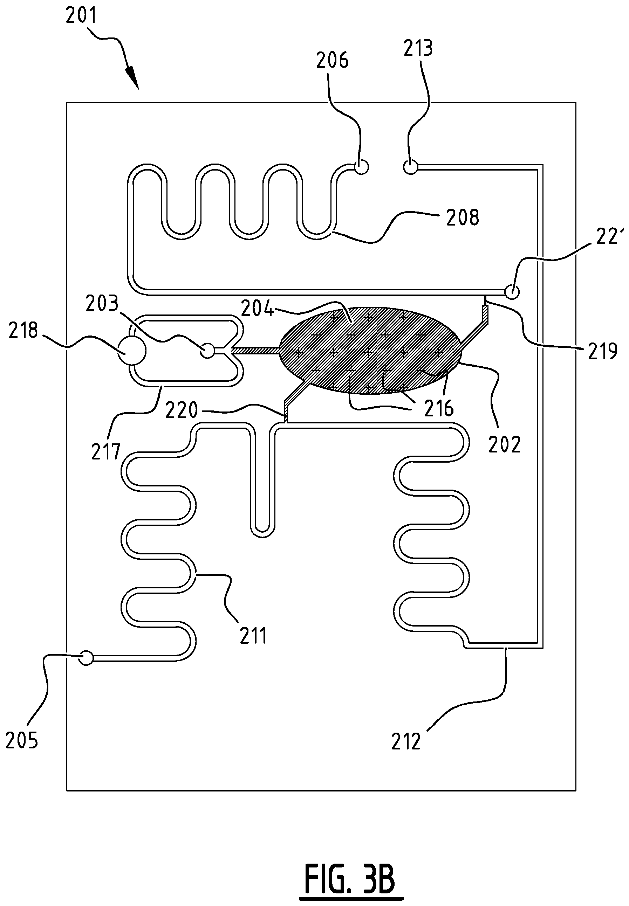

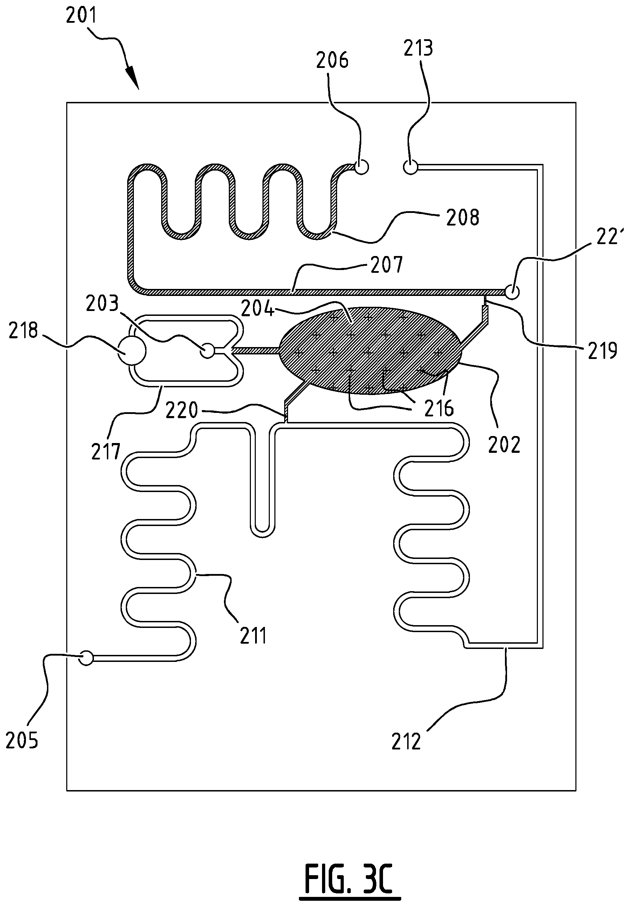

Figures 3A and 3B show a chip 201 which can be used for delivering a mixed fluid 215 at a predetermined mixing ratio, by reducing the influence of viscosity variations in a first fluid 204. The chip 201 - shown empty in figure 3A - includes first, second and third inlets 203, 206, 213 and outlet 205. The chip 201 further includes a container 202. The container 202 in this example is formed by a chamber machined from a first layer of material of the chip 201, and closed by a second layer of material of the chip 201. Of course other production methods are also possible, such as embossing or etching. The passages 208, 211, 212 and other parts of the microfluidic flow system of the chip are formed in the same way. The container 202 includes pillars 216 to prevent collapsing. The first inlet 203 connects to the container 202. Near the first inlet, an overflow channel 217 is provided which connects to a wick 218. The second inlet 206 also connects to the container 202, via a first passage 208. The first passage 208 is separated from the container via a first capillary stop valve 219. Until triggered, the first capillary stop valve 219 stops liquid from exiting the container 202 into the first passage 208. The first passage 208 includes a vent 221, which is placed beyond the container 202 as seen from the second inlet 206. The outlet 205 is also connected to the container 202, via a second passage 211. The second passage 211 is separated from the container 202 via a second capillary stop valve 220. Until triggered, the second capillary stop valve 220 stops liquid from exiting the container into the second passage 211. Finally, the third inlet 213 is connected to the second passage via a third passage 212. The third passage 212 connects to the second passage 211 downstream of the second capillary stop valve 220, i.e. further towards the outlet 205. The capillary stop valves 219, 220 form the smallest cross sectional through flow areas of the first and second passages 208, 211 respectively. The cross sectional area of the first capillary stop valve 219 is smaller than the cross sectional area of the second capillary stop valve 220. As such, the resistance to flow is highest in the first capillary stop valve 219.

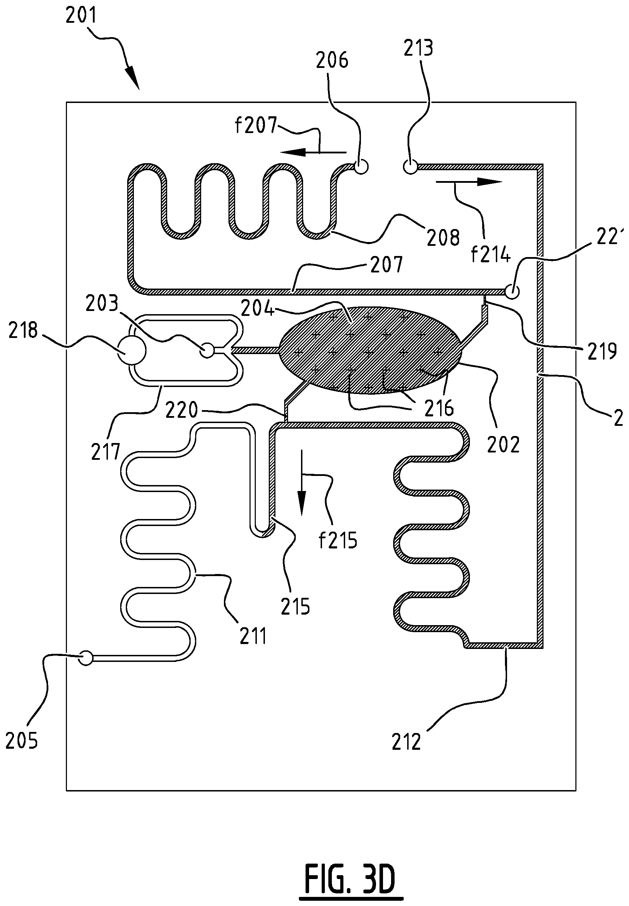

The chip 202 is used as follows. First, an empty chip 201 is provided (see figure 3A). Second, first liquid 204 is inserted through the first inlet 203 (see figure 3B). The first liquid 204 fills the container 202. During filling, air present in the container 202 exits through the vent 221. It is also possible air exits through the first, second and third passages 208, 211, 212 when the second and third inlets 206, 213 and the outlet 205 are left free during filling. If too much first liquid 216 is inserted, a surplus will flow via the bypass channel 217 towards the wick 218 in order to be absorbed. As such, the wick 218 prevents capillary stop valves 219, 220 from triggering when a surplus of first liquid 204 is supplied. Third, a second liquid 207 is let in through second inlet 206, until the first passage 208 is filled. During filling of the first passage 208, air from the first passage exits through the vent 221. When the second liquid 207 reaches the first capillary stop valve 219, said stop valve 219 is triggered, thereby allowing flow. However, as the second capillary stop valve 220 remains untriggered, both the first and second liquid 204, 207 stop flowing. Fourth, third liquid 214 is supplied via the third inlet 213 until the third passage 212 is filled. While filling, air exits the third passage 212 via the second passage 211 and the outlet 205. When the third liquid 214 reaches the second capillary stop valve 220, said stop valve 220 is triggered, thereby allowing flow. Then, by creating a pressure differential from the second and third inlets 206, 213 to the outlet 205, the second and third liquids 207, 214 will flow in the direction indicated by arrows f207 and f214 respectively (see figure 3D). As such, the second liquid 207 pushes the first liquid 204 out of the container 202, through the second capillary stop valve 220 into the second passage 211 towards the outlet 205. At the same time, third liquid also flows into the second passage 211 towards the outlet 205, so that the first and third liquid 204, 214 is mixed. The resulting mixed fluid 215 flows from the container 202 towards the outlet 205 as is shown using an arrow f215.

It is noted that while flowing, the second liquid 207 contacts the first capillary stop valve 219, and the first liquid 204 contacts the second capillary stop valve 220. Since the first capillary stop valve 219 is smallest, it has a relatively high resistance to flow. As such, the viscosity of the second liquid 208, in combination with the first capillary stop valve 219 is defining to a relatively large extent for the flow rate of the first liquid 204 downstream. As such, variations in the viscosity of the first liquid 204 are of less influence. The same principle can be employed by choosing a second liquid 208 with a higher viscosity than the first liquid 204, even without having different geometries for the capillary stop valves 219, 220 or the first and second passages 208, 211. Of course, a combination of these strategies is also possible.

## Claims

1. Pressure driven method of delivering a first liquid (4) at a determined flow rate, the method comprising the steps, to be performed in sequential order, of:
a) at least partly filling a container (2, 102, 202) with an amount of the first liquid (4, 104, 204);
b) causing a second liquid (7, 107, 207) to flow into the container (2, 107, 207) via a first passage (8, 108, 208), thereby forcing at least some of the first liquid (4, 104, 204) out of the container (2, 102, 202), in order to discharge said at least some of the first liquid (4, 104, 204) through a second passage (11, 111, 211);
wherein the first passage (8, 108, 208) has a first resistance to the flow of the first liquid (4, 104, 204), and the second passage (11, 111, 211) has a second resistance to flow of the second liquid (7, 107, 207), wherein the first resistance is higher than the second resistance.

2. Method according to claim 1, further comprising supplying a third liquid (114, 214) downstream of the container (102, 202) in order to mix the first liquid (104, 204) with the third liquid (114, 214) at a predetermined concentration of first liquid (104, 204).

3. Method according to the previous claim, wherein the first liquid (104, 204) is supplied via a first inlet (103, 203), and the second liquid (107, 207) is supplied via a separate, second inlet (106, 206).

4. Method according to any one or more of claims 1 - 3, wherein a viscosity of the second liquid (7, 107, 207) is higher than a viscosity of the first liquid (4, 104, 204).

5. Method according to any one or more of claims 1 - 4, wherein the first resistance is at least approximately ten times higher than the second resistance.

6. Pressure driven microfluidic chip (1, 101, 201) for delivering a first liquid (4, 104, 204) at a determined flow rate, said chip (1, 101, 201) comprising:
- a first inlet (3, 103, 203), for letting the first liquid (4, 104, 204) into the chip (1, 101, 201);
- a container (2, 102, 202) connected to the first inlet (3, 103, 203), for at least temporarily containing an amount of first liquid (4, 104, 204);
- a second inlet (6, 106, 206) connected to the container (2, 102, 202) via a first passage (8, 108, 208), for letting in a second liquid (7, 107, 207) into the chip (1, 101, 201);
- a second passage (11, 111, 211) connecting the container (2, 102, 202) to an outlet (5, 105, 205), allowing flow of the first liquid (4, 104, 204) into the second passage (11, 111, 211), thereby delivering the first liquid (4, 104, 204);
wherein
the first passage (8, 108, 208) has a first resistance to liquid flow, and the second passage (11, 111, 211) has a second resistance to liquid flow, wherein the first resistance is higher than the second resistance,
**characterized in that**
the chip (201) further comprises a vent (221) connected to the first passage (208) at a position beyond the container (202) as seen from the second inlet (206).

7. Chip (101, 201) according to claim 6, further comprising a third passage (112, 212) connected to the second passage (111, 211) downstream of the container (102, 202) for supplying a third liquid (114, 214) to the second passage (111, 211), the chip (101, 201) thereby being suitable for mixing the third liquid (114, 214) with the first liquid (104, 204).

8. Chip (101, 201) according to the previous claim, further comprising a third inlet (113, 213) connected to the second and/or third passage (112, 212).

9. Chip (101, 201) according to any one or more of the preceding claims 6 - 8, wherein a minimum cross sectional area of the first passage (108, 208) is smaller than a minimum cross sectional area of the second passage (111, 211).

10. Chip (101, 201) according to the previous claim and at least claim 7, wherein the minimum cross sectional area of the first passage (108, 208) is smaller than a minimum cross sectional area of the third passage (112, 212).

11. Chip (101, 201) according to any one or more of the preceding claims 6 - 10, comprising a capillary stop valve (219) between the container (102, 202) and the first passage (108, 208) and/or a capillary stop valve (220) between the container (102, 202) and the second passage (111, 211).

12. Chip (101, 201) according to any one or more of the preceding claims 6 - 11, further comprising an absorber connected to the first inlet (103, 203).

## Patentansprüche

1. Druckbetriebenes Verfahren zum Abgeben einer ersten Flüssigkeit (4) mit einer bestimmten Durchflussrate, das Verfahren umfassend die in sequenzieller Reihenfolge durchzuführenden Schritte:
a) mindestens teilweises Befüllen eines Behälters (2, 102, 202) mit einer Menge der ersten Flüssigkeit (4, 104, 204);
b) Bewirken, dass eine zweite Flüssigkeit (7, 107, 207) über einen ersten Durchgang (8, 108, 208) in den Behälter (2, 107, 207) fließt, wodurch mindestens ein Teil der ersten Flüssigkeit (4, 104, 204) aus dem Behälter (2, 102, 202) herausgedrückt wird, um den mindestens einen Teil der ersten Flüssigkeit (4, 104, 204) durch einen zweiten Durchgang (11, 111, 211) abzulassen;
wobei der erste Durchgang (8, 108, 208) einen ersten Widerstand gegen den Durchfluss der ersten Flüssigkeit (4, 104, 204) aufweist und der zweite Durchgang (11, 111, 211) einen zweiten Widerstand gegen den Durchfluss der zweiten Flüssigkeit (7, 107, 207) aufweist, wobei der erste Widerstand höher als der zweite Widerstand ist.

2. Verfahren nach Anspruch 1, ferner umfassend ein Zuführen einer dritten Flüssigkeit (114, 214) stromabwärts des Behälters (102, 202), um die erste Flüssigkeit (104, 204) mit der dritten Flüssigkeit (114, 214) bei einer zuvor bestimmten Konzentration von erster Flüssigkeit (104, 204) zu mischen.

3. Verfahren nach dem vorstehenden Anspruch, wobei die erste Flüssigkeit (104, 204) über einen ersten Einlass (103, 203) zugeführt wird und die zweite Flüssigkeit (107, 207) über einen separaten, zweiten Einlass (106, 206) zugeführt wird.

4. Verfahren nach einem oder mehreren der Ansprüche 1 bis 3, wobei eine Viskosität der zweiten Flüssigkeit (7, 107, 207) höher als eine Viskosität der ersten Flüssigkeit (4, 104, 204) ist.

5. Verfahren nach einem oder mehreren der Ansprüche 1 bis 4, wobei der erste Widerstand mindestens etwa zehnmal höher als der zweite Widerstand ist.

6. Druckbetriebener Mikrofluidikchip (1, 101, 201) zum Abgeben einer ersten Flüssigkeit (4, 104, 204) mit einer bestimmten Durchflussrate, der Chip (1, 101, 201) umfassend:
- einen ersten Einlass (3, 103, 203) zum Einlassen der ersten Flüssigkeit (4, 104, 204) in den Chip (1, 101, 201);
- einen Behälter (2, 102, 202), der mit dem ersten Einlass (3, 103, 203) verbunden ist, um mindestens vorübergehend eine Menge von erster Flüssigkeit (4, 104, 204) zu enthalten;
- einen zweiten Einlass (6, 106, 206), der über einen ersten Durchgang (8, 108, 208) mit dem Behälter (2, 102, 202) verbunden ist, zum Einlassen einer zweiten Flüssigkeit (7, 107, 207) in den Chip (1, 101, 201);
- einen zweiten Durchgang (11, 111, 211), der den Behälter (2, 102, 202) mit einem Auslass (5, 105, 205) verbindet, wobei der Durchfluss der ersten Flüssigkeit (4, 104, 204) in den zweiten Durchgang (11, 111, 211) ermöglicht wird, wodurch die erste Flüssigkeit (4, 104, 204) abgegeben wird;
wobei
der erste Durchgang (8, 108, 208) einen ersten Widerstand gegen Flüssigkeitsdurchfluss aufweist und der zweite Durchgang (11, 111, 211) einen zweiten Widerstand gegen Flüssigkeitsdurchfluss aufweist, wobei der erste Widerstand höher als der zweite Widerstand ist,
**dadurch gekennzeichnet, dass**
der Chip (201) ferner eine Entlüftung (221) umfasst, die mit dem ersten Durchgang (208) an einer Position jenseits des Behälters (202) verbunden ist, wie von dem zweiten Einlass (206) aus gesehen.

7. Chip (101, 201) nach Anspruch 6, ferner umfassend einen dritten Durchgang (112, 212), der mit dem zweiten Durchgang (111, 211) stromabwärts des Behälters (102, 202) verbunden ist, zum Zuführen einer dritten Flüssigkeit (114, 214) zu dem zweiten Durchgang (111, 211), wodurch der Chip (101, 201) zum Mischen der dritten Flüssigkeit (114, 214) mit der ersten Flüssigkeit (104, 204) geeignet ist.

8. Chip (101, 201) nach dem vorstehenden Anspruch, ferner umfassend einen dritten Einlass (113, 213), der mit dem zweiten und/oder dritten Durchgang (112, 212) verbunden ist.

9. Chip (101, 201) nach einem oder mehreren der vorstehenden Ansprüche 6 bis 8, wobei eine minimale Querschnittsfläche des ersten Durchgangs (108, 208) kleiner als eine minimale Querschnittsfläche des zweiten Durchgangs (111, 211) ist.

10. Chip (101, 201) nach dem vorstehenden Anspruch und mindestens Anspruch 7, wobei die minimale Querschnittsfläche des ersten Durchgangs (108, 208) kleiner als eine minimale Querschnittsfläche des dritten Durchgangs (112, 212) ist.

11. Chip (101, 201) nach einem oder mehreren der vorstehenden Ansprüche 6 bis 10, umfassend ein Kapillarstoppventil (219) zwischen dem Behälter (102, 202) und dem ersten Durchgang (108, 208) und/oder ein Kapillarstoppventil (220) zwischen dem Behälter (102, 202) und dem zweiten Durchgang (111, 211).

12. Chip (101, 201) nach einem oder mehreren der vorstehenden Ansprüche 6 bis 11, ferner umfassend einen Absorber, der mit dem ersten Einlass (103, 203) verbunden ist.

## Revendications

1. Procédé d'entraînement par pression permettant de distribuer un premier liquide (4) à un débit déterminé, le procédé comprenant les étapes, à effectuer dans un ordre séquentiel, consistant à:
a) remplir au moins partiellement un récipient (2, 102, 202) avec une quantité du premier liquide (4, 104, 204);
b) provoquer l'écoulement d'un deuxième liquide (7, 107, 207) dans le récipient (2, 107, 207) par l'intermédiaire d'un premier passage (8, 108, 208), forçant ainsi au moins une partie du premier liquide (4, 104, 204) à sortir du récipient (2, 102, 202), afin d'évacuer ladite au moins une partie du premier liquide (4, 104, 204) par un deuxième passage (11, 111, 211);
dans lequel le premier passage (8, 108, 208) présente une première résistance à l'écoulement du premier liquide (4, 104, 204), et le deuxième passage (11, 111, 211) présente une seconde résistance à l'écoulement du deuxième liquide (7, 107, 207), dans lequel la première résistance est supérieure à la seconde résistance.

2. Procédé selon la revendication 1, comprenant en outre la fourniture d'un troisième liquide (114, 214) en aval du récipient (102, 202) afin de mélanger le premier liquide (104, 204) avec le troisième liquide (114, 214) à une concentration prédéterminée du premier liquide (104, 204).

3. Procédé selon la revendication précédente, dans lequel le premier liquide (104, 204) est fourni par l'intermédiaire d'une première entrée (103, 203), et le deuxième liquide (107, 207) est fourni par l'intermédiaire d'une deuxième entrée séparée (106, 206).

4. Procédé selon l'une ou plusieurs quelconques des revendications 1 à 3, dans lequel une viscosité du deuxième liquide (7, 107, 207) est supérieure à une viscosité du premier liquide (4, 104, 204).

5. Procédé selon l'une ou plusieurs quelconques des revendications 1 à 4, dans lequel la première résistance est au moins approximativement dix fois supérieure à la seconde résistance.

6. Puce microfluidique à entraînement par pression (1, 101, 201) pour distribuer un premier liquide (4, 104, 204) à un débit déterminé, ladite puce (1, 101, 201) comprenant:
- une première entrée (3, 103, 203), pour faire pénétrer le premier liquide (4, 104, 204) dans la puce (1, 101, 201);
- un récipient (2, 102, 202) connecté à la première entrée (3, 103, 203), pour contenir au moins temporairement une quantité de premier liquide (4, 104, 204);
- une deuxième entrée (6, 106, 206) connectée au récipient (2, 102, 202) par l'intermédiaire d'un premier passage (8, 108, 208), pour faire pénétrer un deuxième liquide (7, 107, 207) dans la puce (1, 101, 201);
- un deuxième passage (11, 111, 211) reliant le récipient (2, 102, 202) à une sortie (5, 105, 205), permettant l'écoulement du premier liquide (4, 104, 204) dans le deuxième passage (11, 111, 211), distribuant ainsi le premier liquide (4, 104, 204);
dans laquelle
le premier passage (8, 108, 208) présente une première résistance à l'écoulement de liquide, et le deuxième passage (11, 111, 211) présente une seconde résistance à l'écoulement de liquide, dans laquelle la première résistance est supérieure à la seconde résistance,
**caractérisée en ce que**
la puce (201) comprend en outre un évent (221) relié au premier passage (208) à une position située au-delà du récipient (202) vu depuis la deuxième entrée (206).

7. Puce (101, 201) selon la revendication 6, comprenant en outre un troisième passage (112, 212) relié au deuxième passage (111, 211) en aval du récipient (102, 202) pour fournir un troisième liquide (114, 214) au deuxième passage (111, 211), la puce (101, 201) étant ainsi apte à mélanger le troisième liquide (114, 214) avec le premier liquide (104, 204).

8. Puce (101, 201) selon la revendication précédente, comprenant en outre une troisième entrée (113, 213) reliée au deuxième et/ou au troisième passage (112, 212).

9. Puce (101, 201) selon l'une quelconque ou plusieurs des revendications précédentes 6 à 8, dans laquelle une section transversale minimale du premier passage (108, 208) est inférieure à une section transversale minimale du deuxième passage (111, 211).

10. Puce (101, 201) selon la revendication précédente et au moins la revendication 7, dans laquelle la section transversale minimale du premier passage (108, 208) est inférieure à la section transversale minimale du troisième passage (112, 212).

11. Puce (101, 201) selon l'une quelconque ou plusieurs des revendications précédentes 6 à 10, comprenant une vanne d'arrêt capillaire (219) entre le récipient (102, 202) et le premier passage (108, 208) et/ou une vanne d'arrêt capillaire (220) entre le récipient (102, 202) et le deuxième passage (111, 211).

12. Puce (101, 201) selon l'une quelconque ou plusieurs des revendications précédentes 6 à 11, comprenant en outre un absorbeur relié à la première entrée (103, 203).
